# EUROPEAN PATENT APPLICATION

(11) **EP 4 727 082 A1**
(43) Date of publication of application: **15.04.2026**
(21) Application number: 23940185.4
(22) Date of filing: 09.06.2023
(51) Int. Cl.: H04L 41/16

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LI, Dexin, Dongguan, Guangdong 523860 (CN)
(74) Representative: Taor, Simon Edward William
(86) International application number: PCT/CN2023/099532
(87) International publication number: WO 2024/250303

(57) **Abstract**

The present disclosure relates to a communication method and a device. The method includes a first communication device receiving model format configuration information from a second communication device. The method further includes the first communication device performing a model format-related operation according to the model format configuration information. In the embodiment of the present disclosure, a model format of a communication device can be indicated through the model format configuration information, thereby improving the compatibility of the model among different devices.

## Description

### TECHNICAL FIELD

This disclosure relates to the field of communication, in particular to a communication method and a device.

### BACKGROUND

In the field of communication, attempts have already been made to use artificial intelligence (AI) technology. For the application of an AI model in the field of communication, such as wireless communication, it is necessary to consider requirements under actual scenarios to improve the compatibility of the AI model with diversified devices.

### SUMMARY

Embodiments of the present disclosure provide a communication method and a device, which can improve the compatibility of a model.

Embodiments of the present disclosure provide a communication method. The communication method includes the following. A first communication device receives model format configuration information from a second communication device. The first communication device performs a model format-related operation according to the model format configuration information.

Embodiments of the present disclosure provide a communication method. The communication method includes a second communication device transmitting model format configuration information to a first communication device. The model format configuration information is used for indicating to the first communication device to perform a model format-related operation.

Embodiments of the present disclosure provide a first communication device. The first communication device includes a receiving unit and a processing unit. The receiving unit is configured for the communication device to receive model format configuration information from a second communication device. The processing unit is configured for the first communication device to perform a model format-related operation according to the model format configuration information.

Embodiments of the present disclosure provide a second communication device. The second communication device includes a first transmitting unit configured to transmit model format configuration information to a first communication device. The model format configuration information is used for indicating to the first communication device to perform a model format-related operation.

Embodiments of the present disclosure provide a communication device. The communication device includes a processor and a memory. The memory is configured to store a computer program. The processor is configured to invoke and execute the computer program stored in the memory, to cause the terminal device to perform the foregoing communication method.

Embodiments of the present disclosure provide a network device. The network device includes a processor and a memory. The memory is configured to store a computer program. The processor is configured to invoke and execute the computer program stored in the memory, to cause the network device to perform the foregoing communication method.

Embodiments of the present disclosure provide a chip. The chip is configured to perform the foregoing communication method. Specifically, the chip includes a processor configured to invoke and execute a computer program from a memory, to cause a device installed with the chip to perform the foregoing communication method.

Embodiments of the present disclosure provide a computer-readable storage medium configured to store a computer program which, when executed on a device, causes the device to perform the foregoing communication method.

Embodiments of the present disclosure provide a computer program product. The computer program product includes computer program instructions that are operable with a computer to perform the foregoing communication method.

Embodiments of the present disclosure provide a computer program which, when executed on a computer, causes the computer to perform the foregoing communication method.

In the embodiments of the present disclosure, a model format of a communication device can be indicated through the model format configuration information, thereby improving the compatibility of the model among different devices.

### BRIEF DESCRIPTION OF THE DRAWINGS

FIG. 1 is a schematic diagram of an application scenario according to an embodiment of the present disclosure.
FIG. 2 is a schematic diagram of a multilayer neural network.
FIG. 3 is a schematic diagram of a channel-state information feedback system.
FIG. 4a and FIG. 4b are schematic diagrams of a beam sweeping process.
FIG. 5 is a schematic flowchart of a communication method according to an embodiment of the present disclosure.
FIG. 6 is a schematic flowchart of a communication method according to another embodiment of the present disclosure.
FIG. 7 is a schematic flowchart of a communication method according to another embodiment of the present disclosure.
FIG. 8 is a schematic flowchart of a communication method according to an embodiment of the present disclosure.
FIG. 9 is a schematic flowchart of a communication method according to another embodiment of the present disclosure.
FIG. 10 is a schematic flowchart of a communication method according to another embodiment of the present disclosure.
FIG. 11 is a schematic flowchart of an indication method for AI model conversion according to an embodiment of the present disclosure.
FIG. 12 is a schematic flowchart of example 1-1 according to the present disclosure.
FIG. 13 is a schematic flowchart of example 1-2 according to the present disclosure.
FIG. 14 is a schematic flowchart of example 2-1 according to the present disclosure.
FIG. 15 is a schematic flowchart of example 2-3 according to the present disclosure.
FIG. 16 is a schematic flowchart of example 3 according to the present disclosure.
FIG. 17 is a schematic block diagram of a first communication device according to an embodiment of the present disclosure.
FIG. 18 is a schematic block diagram of a first communication device according to another embodiment of the present disclosure.
FIG. 19 is a schematic block diagram of a second communication device according to an embodiment of the present disclosure.
FIG. 20 is a schematic block diagram of a second communication device according to another embodiment of the present disclosure.
FIG. 21 is a schematic block diagram of a communication device according to an embodiment of the present disclosure.
FIG. 22 is a schematic block diagram of a chip according to an embodiment of the present disclosure.
FIG. 23 is a schematic block diagram of a communication system according to an embodiment of the present disclosure.

### DETAILED DESCRIPTION

The following will describe technical solutions of embodiments of the disclosure with reference to the accompanying drawings in embodiments of the disclosure.

Embodiments of the disclosure are applicable to various communication systems, for example, a global system of mobile communication (GSM), a code division multiple access (CDMA) system, a wideband code division multiple access (WCDMA) system, a general packet radio service (GPRS), a long term evolution (LTE) system, an advanced LTE (LTE-A) system, a new radio (NR) system, an evolved system of an NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), a wireless fidelity (Wi-Fi), a 5^{th} generation (5G) system, or other communication systems.

Generally speaking, a conventional communication system generally supports a limited quantity of connections and therefore is easy to implement. However, with development of communication technology, a mobile communication system will not only support conventional communication but also support, for example, device to device (D2D) communication, machine to machine (M2M) communication, machine type communication (MTC), vehicle to vehicle (V2V) communication, or vehicle to everything (V2X) communication, etc. Embodiments of the disclosure can also be applied to these communication systems.

In one implementation, a communication system in embodiments of the disclosure may be applied to a carrier aggregation (CA) scenario, a dual connectivity (DC) scenario, or a standalone (SA) network deployment scenario.

In one implementation, the communication system in embodiments of the disclosure is applicable to an unlicensed spectrum, and an unlicensed spectrum may be regarded as a shared spectrum. Alternatively, the communication system in embodiments of the disclosure is applicable to a licensed spectrum, and a licensed spectrum may be regarded as a non-shared spectrum.

Various embodiments of the disclosure are described in connection with a network device and a terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device, etc.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, and a terminal device in a next-generation communication system, for example, a terminal device in an NR network, or a terminal device in a future evolved public land mobile network (PLMN), etc.

In embodiments of the disclosure, the terminal device can be deployed on land, which includes indoor or outdoor, handheld, wearable, or in-vehicle. The terminal device can also be deployed on water (such as ships, etc.). The terminal device can also be deployed in the air (such as airplanes, balloons, satellites, etc.).

In embodiments of the disclosure, the terminal device can be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medicine, a wireless terminal device in smart grid, a wireless terminal device in transportation safety, a wireless terminal device in smart city, or a wireless terminal device in smart home, etc.

By way of explanation rather than limitation, in embodiments of the disclosure, the terminal device may also be a wearable device. The wearable device may also be called a wearable smart device, which is a generic term of wearable devices obtained through intelligentization design and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In embodiments of the disclosure, the network device may be a device configured to communicate with a mobile device, and the network device may be an access point (AP) in a WLAN, a base transceiver station (BTS) in GSM or CDMA, may also be a Node B (NB) in WCDMA, and may also be an evolutional Node B (eNB or eNodeB) in LTE, or a relay station or AP, or an in-vehicle device, a wearable device, a network device (gNB) in an NR network, a network device in a future evolved PLMN, or a network device in an NTN, etc.

By way of explanation rather than limitation, in embodiments of the disclosure, the network device may be mobile. For example, the network device may be a mobile device. Optionally, the network device may be a satellite or a balloon base station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on land or water.

In embodiments of the disclosure, the network device provides services for a cell, and the terminal device communicates with the network device on a transmission resource (for example, a frequency-domain resource or a spectrum resource) for the cell. The cell may be a cell corresponding to the network device (for example, a base station). The cell may correspond to a macro base station, or may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

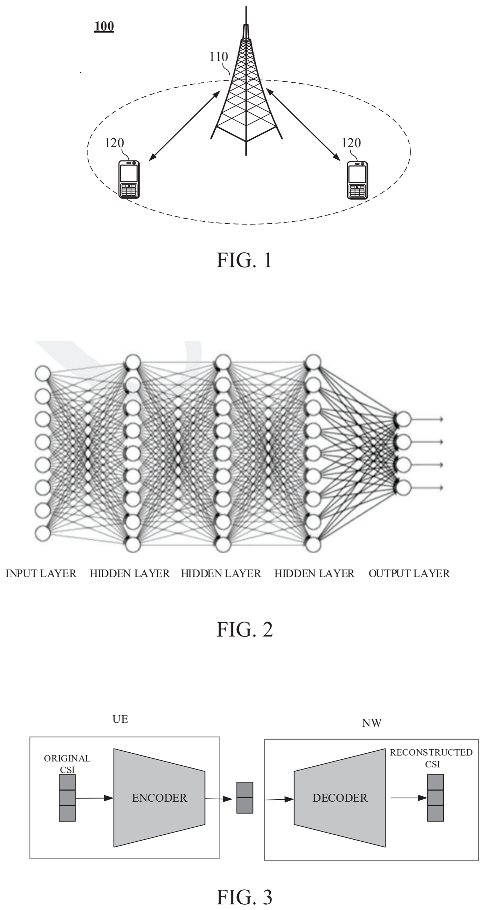

FIG. 1 exemplarily illustrates a communication system 100. The communication system includes one network device 110 and two terminal devices 120. In one implementation, the communication system may include multiple network devices 110, and the coverage area of each network device 110 may include other numbers of terminal devices 120. Embodiments of the disclosure are not limited in this regard.

In one implementation, the communication system 100 may further include other network entities such as a mobility management entity (MME), an access and mobility management function (AMF), etc., and embodiments of the disclosure are not limited in this regard.

The network device may further include an access network device and a core network device. That is, the wireless communication system further includes multiple core networks for communicating with the access network device. The access network device may be an evolved Node B (eNB or e-NodeB for short), a macro base station, a micro base station (also referred to as a "small base station"), a pico base station, an access point (AP), a transmission point (TP), or a new generation Node B (gNodeB) in a long-term evolution (LTE) system, a next radio (NR) system, or an authorized auxiliary access long-term evolution (LAA-LTE) system, etc.

It should be understood that, in embodiments of the disclosure, a device with communication functions in a network/system can be referred to as a "communication device". Taking the communication system illustrated in FIG. 1 as an example, the communication device may include the network device and the terminal device(s) that have communication functions. The network device and the terminal device(s) can be the devices described above and will not be elaborated again herein. The communication device may further include other devices such as a network controller, a mobile management entity, or other network entities in the communication system, and embodiments of the disclosure are not limited in this regard.

It should be understood that, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "/" herein generally indicates that the associated objects are in an "or" relationship.

It should be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that that there is an association relationship between A and B.

In the elaboration of embodiments of the disclosure, the term "correspondence" may mean that there is a direct or indirect correspondence between the two, may mean that there is an association between the two, or may mean a relationship of indicating and indicated or configuring and configured, etc.

In order for better understanding of technical solutions of embodiments of the present disclosure, the related technologies of embodiments of the present disclosure will be described below. The following related art as an optional scheme can be arbitrarily combined with the technical solutions of embodiments of the present disclosure, which shall all belong to the protection scope of embodiments of the present disclosure.

### 1. Artificial Intelligence (AI)

In recent years, research on AI represented by neural networks has achieved significant results in many fields, and will also play an important role in people's production and life for a long time in the future. In particular, as an important research direction of AI technology, machine learning (ML) utilizes the non-linear processing capability of neural networks (NN) and successfully solves a series of problems that were previously difficult to handle. ML even shows performance stronger than that of human in fields such as image recognition, speech processing, natural language processing, and games, thus attracting more and more attention recently.

The artificial neural network is one model in AI training models. AI network creates a model based on training data, usually to generate a more accurate prediction. A neural network generally adopts a multilayer design. As illustrated in FIG. 2, by feature learning through layer-by-layer training of the multilayer neural network, the learning and processing capabilities of the neural network can be greatly improved, which is widely applied in pattern recognition, signal processing, optimization combination, anomaly detection, and other aspects.

AI has important application potential in many aspects such as modeling of complex and unknown environments, learning, channel prediction, intelligent signal generation and processing, network state tracking and intelligent scheduling, and network optimization deployment, which is expected to promote the evolution of future communication paradigms and the transformation of network architectures, and has very important significance and value for 6G technology research.

### 2. AI Model Conversion

Currently, mainstream deep learning frameworks on a personal computer (PC) side include Tensor Flow, Keras (a high-level neural network API), Pytorch (an open-source Python machine learning library), convolutional architecture for fast feature embedding (Caffe), and computational network toolkit (CNTK), etc. The generation process of an AI model may include: after modeling, parameter adjustment and training optimization based on a certain deep learning framework, the final generated network parameters and model structure are saved together, and the resulting file is the model file that can be used for forward inference. The formats of model files obtained by training under different deep learning frameworks are not the same. A complete model file can generally include information such as tensor data, operation units, and a computational graph.

Popular deep learning frameworks on a mobile end include TensorFlow Lite (TFLite), Caffe2, nebula convolutional neural network (ncnn), etc. The frameworks are generally forward inference frameworks, that is, only containing an inference function, and a model file used need to be obtained through offline training.

In an example, an AI model is generated under the PC-side deep learning framework, and inference needs to be deployed to the mobile end. Therefore, the AI model needs to go through AI model conversion to adapt to the deep learning framework of the mobile end for correct model inference.

The AI model conversion may include multiple approaches. One AI model conversion approach is to directly convert the model from the current framework into a format suitable for the target framework, which can be called direct conversion technology. In this approach, by reading and loading a model file generated by framework A, the type/format of the tensor data, the type and parameters of the operation units, the structure and naming conventions of the computational graph, and other related information between them in the model network are read and identified, and the above information are translated into a code format supported by framework B. When the operation unit is relatively complex (especially when many parameters are contained), the operation unit structure of framework B can be implemented by encapsulating a corresponding operation unit conversion function in the converter. By saving the model in framework B, the model file supported by framework B can be obtained.

Another AI model conversion approach is to design an open file specification for deep learning, and the mainstream deep learning frameworks can finally support this specification. An example is open neural network exchange (ONNX) technology. ONNX defines an extensible computational graph model, a series of built-in operators (OPs) and standard data types. Each computation graph is defined as a list composed of nodes, and a directed acyclic graph is constructed. Each node has one or more inputs and outputs, and each node is called an OP. This is equivalent to a universal computational graph, and computational graphs constructed by different deep learning frameworks can be converted into the universal computational graph. For some model file converters using the direct conversion technology, the internal implementation mechanism also borrows the ONNX technology.

### 3. AI-based Channel-State Information (CSI) Feedback in NR Systems

Given the great success of AI technology, especially deep learning in computer vision, natural language processing, etc., the communication field has begun to try to use deep learning to solve technical problems that are difficult to solve by traditional communication methods. For example, the neural network architecture commonly used in deep learning is non-linear and data-driven, which can perform feature extraction on actual channel matrix data and restore as much as possible at a base station side the channel matrix information compressed and fed back by a UE side. While ensuring the restoration of channel information, it is possible to reduce CSI feedback overhead at the UE side. In deep learning-based CSI feedback, channel information is regarded as an image to be compressed. A deep learning autoencoder is used to compress and feed back the channel information, and the compressed channel image is reconstructed at the transmitting end, which can retain the channel information to a greater extent.

A CSI feedback system is illustrated in FIG. 3. The system is an autoencoder structure, which is divided into an encoder part and a decoder part. The encoder is deployed at the transmitting end, and the decoder is deployed at the receiving end. After obtaining channel information through channel estimation, the transmitting end compresses and encodes the channel information matrix through a neural network of the encoder, and feeds back the compressed bitstream to the receiving end through an air interface feedback link. The receiving end reconstructs the channel information according to the feedback bitstream through the decoder to obtain complete feedback channel information. A network model structure inside the encoder and decoder illustrated in FIG. 3 can be flexibly designed.

### 4. AI-based Beam Management in NR Systems

A first version of the NR system, namely Rel.15, introduced communication in the millimeter wave frequency band, as well as a corresponding beam management mechanism. To put it simply, the beam management mechanism can be divided into uplink beam management and downlink beam management. Since the solution of the embodiments of the disclosure mainly focuses on a model conversion operation in model transmission and there is no essential difference between uplink and downlink for the model transmission, the downlink beam management mechanism is mainly introduced. The downlink beam management mechanism includes processes such as downlink beam sweeping, UE optimal beam reporting, and network (NW) indication for a downlink beam, etc.

The downlink beam sweeping process may include that the NW sweeps different transmit beam directions through downlink reference signals such as synchronization signal block (SSB) and/or channel state information-reference signal (CSI-RS). The UE can use different receive beams for measurement, so as to traverse all beam-pair combinations, and the UE calculates an L1 (layer 1)-reference signal receiving power (RSRP) value for each pair.

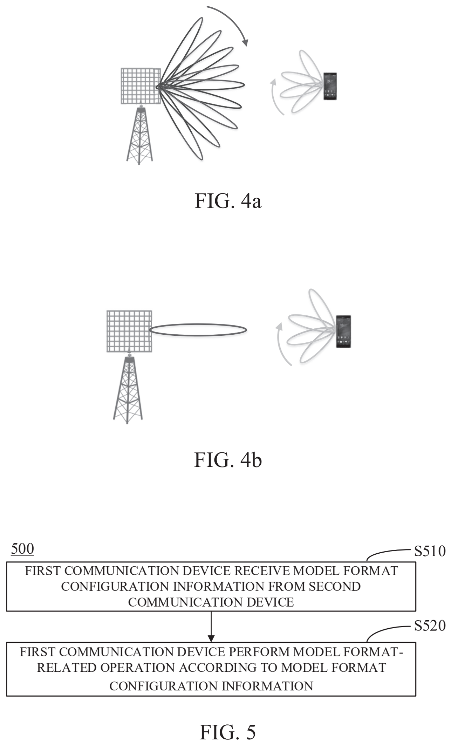

FIG. 4a and FIG. 4b are schematic diagrams of the beam sweeping process. FIG. 4a illustrates traversing transmit beams and receive beams, and FIG. 4b illustrates traversing receive beams for a specific transmit beam.

The beam reporting can include that a UE selects K transmit beams with the highest L1-RSRP value(s) by comparing the L1-RSRP values of all measured beam pairs, and then reports to the NW as uplink control information. The L1-RSRP may also be replaced with other beam link metric, such as L1-signal to interference plus noise ratio (SINR) or L1-reference signal receiving quality (RSRQ), etc. After decoding the beam report of the UE, the NW can carry a transmission configuration indicator (TCI) state (including a transmit beam with the SSB or CSI-RS as reference) through media access control (MAC) or downlink control information (DCI) signaling, to complete the beam indication to the UE. The UE uses the receive beam corresponding to the transmit beam for reception.

AI-based beam management is one of the main use cases of an AI project. An implementation framework for AI-based spatial domain beam prediction and time domain beam prediction includes the following:
realizing beam prediction on beam set A through measurement results of beam set B;
set B can be a subset of set A, or set B and set A can be different beam sets (for example, set A contains narrow beams, and set B contains wide beams);
the AI model can be deployed at the NW side or the UE side; and
the measurement result on set B can be L1-RSRP, or other auxiliary information, such as a beam (pair) ID, etc.

Although Rel.18 has discussed and studied technical solutions for AI model enhancement, which includes different AI model training processes and different AI model transmission methods, there is no detailed discussion on AI model format alignment between different devices. The format of an AI model depends on a training framework, and the formats of model files obtained from training under different deep learning frameworks are not the same. Generally, the AI model is trained on an offline device and then deployed to one or more online devices. For example, the offline training can be carried out under a PC-side deep learning framework, whereas the deployment device may only support a lightweight AI deep learning framework specific to a mobile end. Therefore, the AI model needs to undergo AI model conversion to adapt to the deep learning framework of the mobile end for correct model inference.

To sum up, before the AI solution is widely promoted and implemented in the wireless field, it is necessary to fully consider actual scenario requirements and ensure that the AI model format is adaptively converted between a training device and a deployment device. Therefore, effective signaling interaction regarding model conversion is required between devices to flexibly cope with the challenges of AI model compatibility in diversified devices.

FIG. 5 is a schematic flowchart of a communication method according to an embodiment of the present disclosure. A method 500 is optionally applicable to the system illustrated in FIG. 1, but is not limited thereto. The method includes at least part of the following contents.

S510, a first communication device receives model format configuration information from a second communication device.

S520, the first communication device performs a model format-related operation according to the model format configuration information.

In the embodiment of the present disclosure, a model may be an AI model. For example, the model may be a CSI prediction model, a beam prediction model, a UE positioning model, and a channel estimation model, etc. The first communication device may be a terminal device or a network device. The second communication device may be the terminal device or the network device. If the first communication device and the second communication device have an associated or identical AI model, the second communication device can send the model format configuration information to the first communication device. The model format configuration information can indicate a model format required or supported by the second communication device, and can also indicate a name and function of the model, etc., which may be flexibly set according to an actual application scenario. The name "model format configuration information" is merely an example, and may be changed to other information names such as first configuration information, model conversion configuration information, or model format indication configuration information, etc.

In the embodiment of the present disclosure, the model format configuration information can indicate the model format-related operation, which improves model compatibility. For example, communication devices can perform a model format conversion and/or transmit a model or a model parameter in a specific format through the model format configuration information. Models in different formats can be adapted to different deep learning frameworks, which can flexibly cope with a problem of inconsistent deep frameworks between different devices. In addition, air interface overhead caused by invalid AI model transmission and computational overhead caused by repeated model training can be avoided, device power consumption can be reduced, and model deployment efficiency can be improved.

In an implementation, the model format configuration information is used for indicating whether the second communication device supports one or more model formats. The model format configuration information may indicate that the second communication device supports one model format, may also indicate that the second communication device supports multiple model formats, or may further indicate that the second communication device does not support any model format, which is equivalent to indicating that a model inference function is not supported. For example, the configuration information may include one or more indicator bits, and value(s) of the one or more indicator bits may indicate whether the one or more model formats are supported. In a specific example, a value of 1 of a certain indicator bit may indicate support for format A, and a value of 0 of the indicator bit may indicate no support for format A. In another specific example, values of 10 of two indicator bits may indicate support for format A, values of 11 may indicate no support for format A, values of 01 may indicate support for format B, and values of 00 may indicate no support for the model inference function. The values 0, 1, 10, and 01 in the above examples are merely examples and not limitations, and may be flexibly modified to other values.

In an implementation, the model format configuration information is used for indicating whether the second communication device supports one or more of the following model formats: a Tensorflow (TF) format, a TensorFlow Lite (TFlite or TFlit) format, a PT (Pytorch) format, and an open neural network exchange (ONNX) format. PyTorch is an open-source Python machine learning library. The PT format can be the file format of the PyTorch model. In the embodiment of the present disclosure, with the model format configuration information, the second communication device can flexibly inform the first communication device of whether the second communication device supports the one or more model formats. For example, the configuration information includes an indicator bit for indicating whether the second communication device supports the TF format. A value of 1 of the indicator bit may indicate support for the TF format, and a value of 0 of the indicator bit may indicate no support for the TF format. For another example, the configuration information includes two indicator bits, where one indicator bit B1 is for indicating whether the second communication device supports the TF format, and one indicator bit B2 is for indicating whether the second communication device supports the PT format. A value of 1 of the indicator bit B1 may indicate support for the TF format, and a value of 0 of the indicator bit B1 may indicate no support for the TF format. A value of 1 of the indicator bit B2 may indicate support for the PT format, and a value of 0 of the indicator bit B2 may indicate no support for the PT format. The meanings corresponding to the values 0 and 1 in the above examples may also be interchanged. For another example, the configuration information includes two indicator bits, where a value of 01 of the two indicator bits indicates support for the TF format, a value of 10 indicates support for the PT format, a value of 11 indicates support for the ONNX format, and a value of 00 indicates no support for the model inference function.

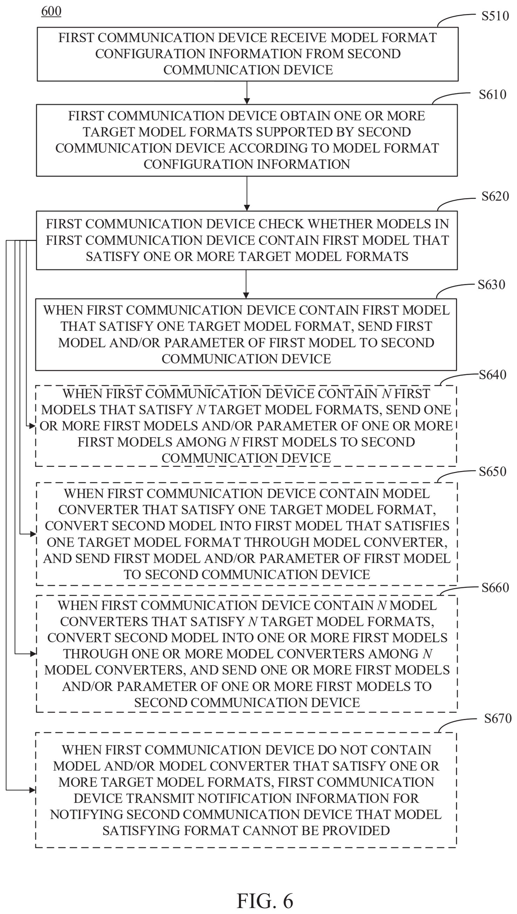

FIG. 6 is a schematic flowchart of a communication method according to another embodiment of the present disclosure. A method 600 may include one or more features of the communication method in the foregoing embodiment. In an implementation, S520 may include the following.

S610, the first communication device obtains one or more target model formats supported by the second communication device according to the model format configuration information.

S620, the first communication device check whether models in the first communication device contain a first model that satisfies the one or more target model formats.

In the embodiment of the present disclosure, if the model format configuration information includes one target model format supported by the second communication device, the one or more models contained in the first communication device may be searched to determine whether there is the first model that satisfies the one or more target model formats. If the first model is contained in first communication device, the first model and/or a parameter of the first model may be transmitted to the second communication device. If there is no first model in first communication device, the first communication device may perform a format conversion, or may inform the second communication device through a message that the model format is not satisfied. In some examples, when multiple target model formats are indicated in the model format configuration information, if the first communication device contains a model satisfying one of the target model formats, the first communication device may transmit the model and/or a model parameter corresponding to the target model format to the second communication device. Other target model format that is not satisfied can be ignored.

In an implementation, the first communication device includes but is not limited to, a model that satisfy one or more of the following model formats: a TF format, a TFlit format, a PT format, and an ONNX format. These model formats are merely examples rather than limitations. In practical applications, there are other model formats, which are not enumerated here.

In the embodiment of the disclosure, after receiving the model format configuration information, the first communication device can determine, according to the model(s) contained in the first communication device, whether the first communication device supports the target model format indicated in the model format configuration information. For example, if the first communication device contains a model satisfying the TF format and the TFlit format, and the model format configuration information indicates the TF format, then the first communication device may send the model in the TF format and/or a parameter of the model to the second communication device. For another example, if the first communication device contains a model(s) satisfying the PT format and the ONNX format, and the model format configuration information indicates the TF format, then the first communication device does not contain a model satisfying the target model format indicated in the model format configuration information. In this case, the first communication device may convert a model in other format into a model in the TF format, and then transmit the model in the TF format and/or a parameter of the model to the second communication device.

In an implementation, the step S520 further includes S630 that, when the first communication device contains the first model that satisfies one target model format, the first model and/or a parameter of the first model is sent to the second communication device.

In an implementation, the step S520 further includes S640 that, when the first communication device contains *N* first models that satisfy *N* target model formats, one or more first models among the *N* first models and/or parameters of the one or more first models are sent to the second communication device.

In an implementation, the step S520 further includes S650 that, when the first communication device contains a model converter that satisfies one target model format, a second model is converted into the first model that satisfies the target model format through the model converter, and the first model and/or a parameter of the first model is sent to the second communication device.

In an implementation, the step S520 further includes S660 that, when the first communication device contains *N* model converters that satisfy *N* target model formats, the second model is converted into one or more first models through one or more model converters among the *N* model converters, and the one or more first models and/or a parameter of the one or more first models are sent to the second communication device.

The aforementioned *N* may be greater than 1. Only one of the aforementioned steps S630, S640, S650, and S660 may be executed according to a specific situation, or multiple steps may be executed.

For example, if the first communication device contains both the first model that satisfies one target model format and the model converter that satisfies the target model format, S630 may be executed to send the first model and/or a parameter of the first model to the second communication device.

For another example, the first communication device contains both the first model that satisfies a target model format G1 and a model converter that satisfies another target model format G2. In one case, S630 may be executed to send the first model satisfying format G1 and/or a parameter of the first model to the second communication device. In another case, S650 may be executed to perform a model format conversion through the model converter satisfying format G2 to obtain a first model satisfying format G2 and/or a parameter of the first model, and then send to the second communication device. In another case, S630 and S650 may be both executed.

For another example, if the first communication device contains *N* first models that satisfy *N* target model formats, for example, *N* being 3, S640 may be executed. In one case, one first model among the 3 first models and/or a parameter of the first model is transmitted to the second communication device. In another case, 2 first models among the 3 first models and/or parameters of the 2 first models are transmitted to the second communication device. In another case, the 3 first models and/or parameters of the 3 first models are transmitted to the second communication device.

For another example, if the first communication device includes *N* model converters that satisfy *N* target model formats, for example, *N* being 3, S660 may be executed. In one case, the second model is converted into one first model through a model converter among the 3 model converters, and the first model and/or a parameter of the first model are transmitted to the second communication device. In another case, the second model is converted into 2 first models through 2 model converters among the 3 model converters, and one first model among the 2 first models and/or a parameter of the first model are transmitted to the second communication device, or the 2 first models and/or parameters of the 2 first models are transmitted to the second communication device. In another case, the second model is converted into 3 first models through the 3 model converters, and a first model among the 3 first models and/or a parameter of the first model are transmitted to the second communication device, or 2 first models among the 3 first models and/or parameters of the 2 first models are transmitted to the second communication device. Alternatively, the 3 first models and/or parameters of the 3 first models are transmitted to the second communication device.

For another example, if the first communication device contains *N* first models and *N* model converters that satisfy *N* target model formats, there may be multiple cases. In one case, S640 may be executed alone to transmit the one or more first models and/or a parameter(s) of the one or more first models to the second communication device. In another case, S660 may be executed alone to transmit, after model conversion, one or more converted first models and/or a parameter(s) of the first models to the second communication device. In another case, S640 and S660 may be executed to transmit one or more existing first models, and transmit the one or more converted first models and/or a parameter(s) of the first models to the second communication device after model conversion.

In an implementation, the first model is obtained based on a model trained by the first communication device or based on a sub-model of the model trained by the first communication device. In the embodiment of the present disclosure, the first model transmitted by the first communication device to the second communication device may be a complete model trained based on a certain framework, a sub-model based on the trained complete model, or a model obtained after format conversion based on the complete model or the sub-model. For example, the trained complete model is a CSI model, and a sub-model of the CSI model includes an encoder model and a decoder model. The first model may be the originally trained CSI model, the originally trained encoder model, the originally trained decoder model, or a model obtained after format conversion from the originally trained CSI model, the encoder model, or the decoder model.

In an implementation, the first communication device is a network device, and the second communication device is a terminal device.

In an implementation, the first model is the encoder model of the CSI model, and the CSI model is trained on the network device and deployed on the network device and/or the terminal device. For example, the encoder model and the decoder model of the CSI model are obtained through training on the network device. If the network device receives a target model format of the CSI model supported by the terminal device and the target model format corresponds to an encoder model in the network device, the network device may transmit the encoder model or a parameter of the encoder model to the terminal device. If the target model format does not correspond to any encoder model in the network device, the network device may perform format conversion on the encoder model according to the target model format before transmitting to the terminal device.

In an implementation, the first communication device is the terminal device, and the second communication device is the network device.

In an implementation, the first model is the decoder model of the CSI model, and the CSI model is trained on the terminal device and deployed on the network device and/or the terminal device. For example, the encoder model and the decoder model of the CSI model are obtained through training on the terminal device. If the terminal device receives a target model format of the CSI model supported by the network device and the target model format corresponds to a decoder model in the terminal device, the terminal device may transmit the decoder model or a parameter of the decoder model to the network device. If the target model format does not correspond to any decoder model in the terminal device, the terminal device may perform format conversion on the decoder model according to the target model format before transmitting to the network device.

In an implementation, the first communication device is a first terminal device, and the second communication device is a second terminal device.

In an implementation, the first model is the encoder model and/or the decoder model of the CSI model, and the CSI model is trained on the first terminal device and deployed on the first terminal device and/or the second terminal device. For example, the encoder model and the decoder model of the CSI model are obtained through training on the first terminal device. If the first terminal device receives the target model format of the CSI model supported by the second terminal device and the target model format corresponds to an encoder model and/or decoder model in the terminal device, the first terminal device may transmit the encoder model and/or the decoder model, or a parameter of the encoder model and/or decoder model to the second terminal device. If the target model format does not correspond to any encoder model and/or decoder model in the first terminal device, the first terminal device may perform format conversion on the encoder model and/or decoder model according to the target model format before transmitting to the second terminal device.

In some examples, information transmitted by the network device to the terminal device may be carried by DCI, and information transmitted by the terminal device to the network device may be carried by uplink control information (UCI). Information interacted between different terminals may be carried by sidelink control information (SCI).

In an implementation, the step S520 further includes S670 that, when the first communication device does not contain a model and/or a model converter that satisfies the one or more target model formats, the first communication device transmits notification information. The notification information is configured to notify the second communication device that a model satisfying the format cannot be provided.

For example, if the model format configuration information received by the first communication device contains a target model format, but the first communication device does not contain a model that satisfies the target model format, notification information may be transmitted to the second communication device to notify that a model satisfying the target model format cannot be provided.

For another example, the model format configuration information received by the first communication device contains a target model format, and the first communication device does not contain a model that satisfies the target model format but contains a model converter that satisfies the target model format. In this case, if a model satisfying the target model format is successfully obtained through conversion by the model converter, the notification message indicating that a model satisfying the format cannot be provided may not be transmitted, but the converted model and/or a parameter of the model may be directly transmitted. If the conversion fails, the notification message may be transmitted, and the notification message may further carry information about the conversion failure and the like.

For another example, the model format configuration information received by the first communication device includes *N* target model formats, and the first communication device contains models that satisfy *M* target model formats, where *M* is less than *N.* In this case, multiple processing manners may be adopted. In a manner, only a model that satisfies the (any one or more of the *M*) target model format(s) and/or a parameter of the model may be transmitted to the second communication device. In another manner, not only the model that satisfies the (any one or more of the *M*) target model format(s) and/or the parameter of the model are transmitted to the second communication device, but also a notification message may be transmitted to notify the second communication device of which target model format is not satisfied in the first communication device.

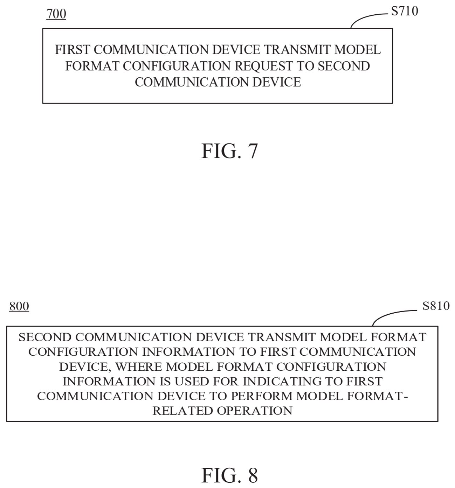

FIG. 7 is a schematic flowchart of a communication method according to another embodiment of the present disclosure. A method 700 may include one or more features of the communication method in the foregoing embodiment. In an implementation, the method further includes the following.

S710, the first communication device transmits a model format configuration request to the second communication device. For example, the step may be performed before S510 or S610. The first communication device firstly transmits the model format configuration request to the second communication device, which is used for requesting the second communication device to transmit a supported model format. The second communication device then returns model format configuration information to the first communication device in response to the model format configuration request. The name "model format configuration request" is merely an example, and may also be changed to a first configuration request, a model conversion configuration request, or a model format indication request, etc.

In an implementation, the model format configuration request is a general-model-format configuration request, and the general-model-format configuration request is used for indicating a general model format for multiple services. For example, the general-model-format configuration request transmitted by the first communication device to the second communication device may indicate a general model format for service 1, service 2, and service 3.

In an implementation, the model format configuration information is general-model-format configuration information, and the general -model-format configuration information contains whether multiple services of one or more the second communication devices support one or more general model formats. For example, if the general-model-format configuration request received by the second communication device indicates a general model format for service 1, service 2, and service 3, the general-model-format configuration information returned by the second communication device to the first communication device may indicate whether service 1, service 2, and service 3 support the one or more general model formats.

FIG. 8 is a schematic flowchart of a communication method according to an embodiment of the present disclosure. A method 800 is optionally applicable to the system illustrated in FIG. 1, but is not limited thereto. The method includes at least part of the following contents.

S810, a second communication device transmits model format configuration information to a first communication device. The model format configuration information is used for indicating to the first communication device to perform a model format-related operation.

In an implementation, the model format configuration information is used for indicating whether the second communication device satisfies one or more model formats.

In an implementation, the model format configuration information is used for indicating whether the second communication device satisfies one or more of the following model formats: a TensorFlow (TF) format, a TensorFlow Lite (TFlit) format, a PT format, and an open neural network exchange (ONNX) format.

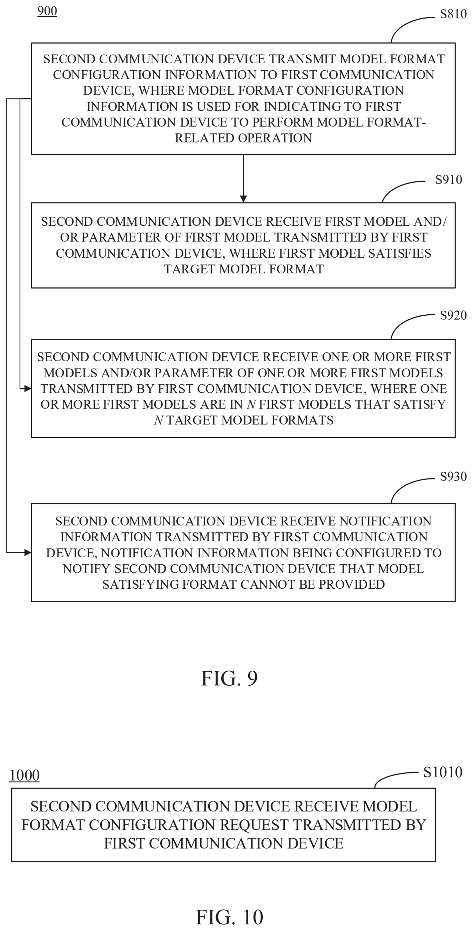

FIG. 9 is a schematic flowchart of a communication method according to another embodiment of the present disclosure. A method 900 may include one or more features of the communication method in the foregoing embodiments. In an implementation, the method further includes the following.

S910, the second communication device receives a first model and/or a parameter of the first model transmitted by the first communication device, where the first model satisfies one target model format. Alternatively, S920, the second communication device receives one or more first models and/or a parameter(s) of the one or more first models transmitted by the first communication device, where the one or more first models are in *N* first models that satisfy *N* target model formats, *N* being greater than 1.

In an implementation, the first model is obtained based on a model trained by the first communication device or based on a sub-model of the model trained by the first communication device.

In an implementation, the first communication device is a network device, and the second communication device is a terminal device.

In an implementation, the first model is an encoder model of a CSI model, and the CSI model is trained on the network device and deployed on the network device and/or the terminal device.

In an implementation, the first communication device is the terminal device, and the second communication device is the network device.

In an implementation, the first model is a decoder model of the CSI model, and the CSI model is trained on the terminal device and deployed on the network device and/or the terminal device.

In an implementation, the first communication device is a first terminal device, and the second communication device is a second terminal device.

In an implementation, the first model is the encoder model and/or the decoder model of the CSI model, and the CSI model is trained on the first terminal device and deployed on the first terminal device and/or the second terminal device.

In an implementation, as illustrated in FIG. 9, the method further includes S930 that the second communication device receives notification information transmitted by the first communication device. The notification information is configured to notify the second communication device that a model satisfying the format cannot be provided.

FIG. 10 is a schematic flowchart of a communication method according to another embodiment of the present disclosure. A method 1000 may include one or more features of the communication method in the foregoing embodiment. In an implementation, the method further includes S1010 that the second communication device receives a model format configuration request transmitted by the first communication device. For example, the step may be performed before S810.

In an implementation, the model format configuration request is a general-model-format configuration request. The general-model-format configuration request is used for indicating a general model format for multiple services.

In an implementation, the model format configuration information is general-model-format configuration information. The general-model-format configuration information includes whether multiple services of one or more second communication devices support one or more general model formats.

In an implementation, the first communication device contains models that satisfy one or more of the following model formats: a TF format, a TFlit format, a PT format, and an ONNX format.

For a specific example of the second communication device in this embodiment performing the communication methods 800, 900, and 1000, reference can be made to the relevant description of the second communication device in the embodiments of the first communication device performing the communication methods. For the sake of simplicity, detail will not be repeated herein.

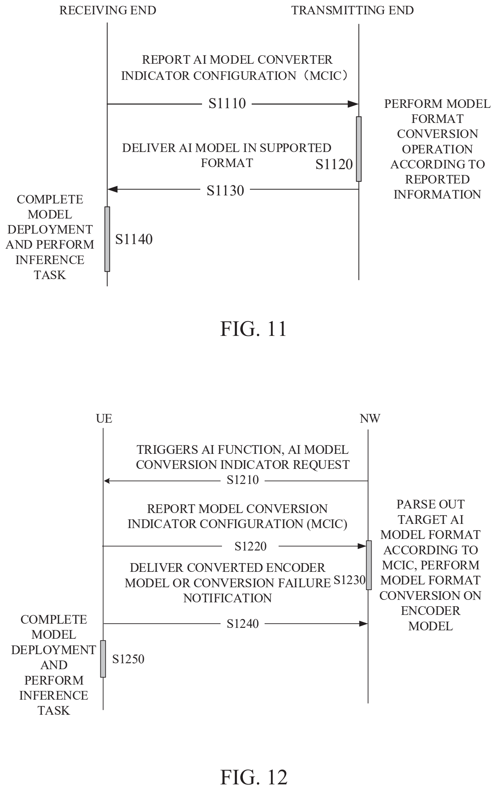

A communication method in the embodiment of the present disclosure may include an indication method for AI model conversion, as illustrated in FIG. 11. During AI model transmission, before a transmitting end device (the device that transmits a model, referred to as the transmitting end for short) transmits an AI model to a receiving end device (the device that receives the model, referred to as the receiving end for short), the receiving end may transmit first configuration information (e.g., AI model format configuration information, AI model format indication configuration information, or AI model conversion model information) to the transmitting end to indicate a AI model format supported by the receiving end. For example, by reporting a supported AI model format indication configuration, the receiving end device can indicate to the transmitting end device to perform an AI model conversion operation. The converted AI model can adapt to different deep learning frameworks in different devices, flexibly coping with the problem of inconsistent AI frameworks between different devices.

In an example, in the system workflow, a reporting process of AI model convertor indicator configuration (MCIC) information may be performed before AI model deployment. Specific steps are exemplified as follows.

S1110, a receiving end entity (or referred to as the receiving end device or receiving end) reports AI MCIC information to a transmitting end entity (or referred to as the transmitting end device or transmitting end). The AI MCIC information may also be referred to as AI model format indication configuration information, AI model format configuration information, or AI model conversion configuration information, etc.

S1120, the transmitting end entity performs a model format conversion operation according to the received MCIC information (i.e., completes model conversion according to the reported information).

S1130, the transmitting end entity delivers to the receiving end entity an AI model in a format supported by the receiving end entity.

S1140, the receiving end entity receives the AI model that conforms to or satisfies a MCIC format requirement in S1110, completes model deployment, and performs a subsequent inference task.

The foregoing working process may be applied to different use cases, and the specific reported content can also be in various forms. A MCIC-related signaling interaction under different model transmission schemes will be specifically described as follows.

### Example 1: AI model conversion in an AI scheme with single-side training and dual-side deployment.

### Example 1-1: Training at the NW side, and deployment at the UE side and the NW side separately. The example is described by taking AI channel-state information feedback as an example.

In an example, a basic network structure of AI channel-state information feedback includes the encoder model and the decoder model. Reference may be made to FIG. 3 and the related description.

The example proposes an AI model conversion indication manner in a channel-state feedback scheme trained at the NW side, as illustrated in FIG. 12.

In the example, the AI-based CSI models (the encoder model and the decoder model) are all trained at the NW side, and the encoder needs to be deployed at the UE side, so the NW needs to transmit the encoder to the UE side. Before transmitting the encoder model, an AI-based CSI function needs to be activated and an AI model convertor indicator configuration (MCIC) needs to be reported to request an encoder model that is supported by the deep learning framework at the UE-side mobile end. The specific process is as follows.

S1210, the NW triggers the AI function and transmits an AI model conversion indication request (may also be referred to as an AI model format indication request, an AI model format configuration request, or an AI model conversion configuration request, etc.) to the UE. For example, the NW transmits the AI model conversion indication request to the UE through DCI. S1210 is optional. For example, the UE may be directly triggered to perform S1220 when any AI service is triggered. For another example, the UE may also report actively, i.e., directly perform S1220.

S 1220, the UE reports the AI MCIC information to the NW through UCI. Specifically, two AI model formats, i.e. TFLit and ONNX are supported in this example (more AI model formats may also be supported), so the MCIC information can be represented by 2 bits as an example:

| indicated information of the first bit of the MCIC | indicated information of the second bit of the MCIC |
|---|---|
| (Support/ Not support) TFLit | (Support/ Not support) ONNX |
| 1/0 | 1/0 |

Based on the above table, the 2-bit value of the MCIC information can be used to indicate the following contents:
- 00:: the current UE does not support an AI-based CSI inference function;
- 01:: only supports an AI model in TFLit format;
- 10:: only supports an AI model in ONNX format;
- 11:: supports both AI models in TFLit and ONNX formats.

S1230, the NW parses out a target AI model format according to the received MCIC, and queries an encoder model file and/or a model converter that satisfy a requirement from the MCIC information.

S1240, the NW delivers a converted encoder model or a conversion failure notification. For example, the following cases may be included. If there is the encoder model file and/or the model converter that satisfy the MCIC requirement in S1230, perform S1240-1. If no encoder model and/or model converter in the target format is found, perform S1240-2.

S1240-1, the NW performs model format conversion and delivers the encoder model that satisfies the format requirement to the UE. The specific conversion method is not limited in the embodiment of the present disclosure, as long as conversion between different AI formats can be performed.

S1240-2, the NW delivers a failure message (or referred to as the conversion failure notification) to notify the UE that an AI model in an effective format cannot be provided.

S1250, the UE receives the encoder model that conforms to or satisfies the MCIC requirement in S1220, and completes deployment and a subsequent inference task.

During AI model transmission, the UE indicates to the NW to perform the AI model conversion operation by reporting the model format conversion indication configuration. The converted AI model can adapt to deep learning frameworks of different UEs, flexibly coping with the problem of inconsistent AI frameworks between different devices. In addition, air interface overhead caused by invalid AI model transmission and computational overhead caused by repeated training of AI models can be avoided, device power consumption can be reduced, and AI model deployment efficiency can be improved.

Example 1-2: Training at the UE side, and deployment on the UE and the NW separately. The example is described by taking AI channel-state information feedback as an example.

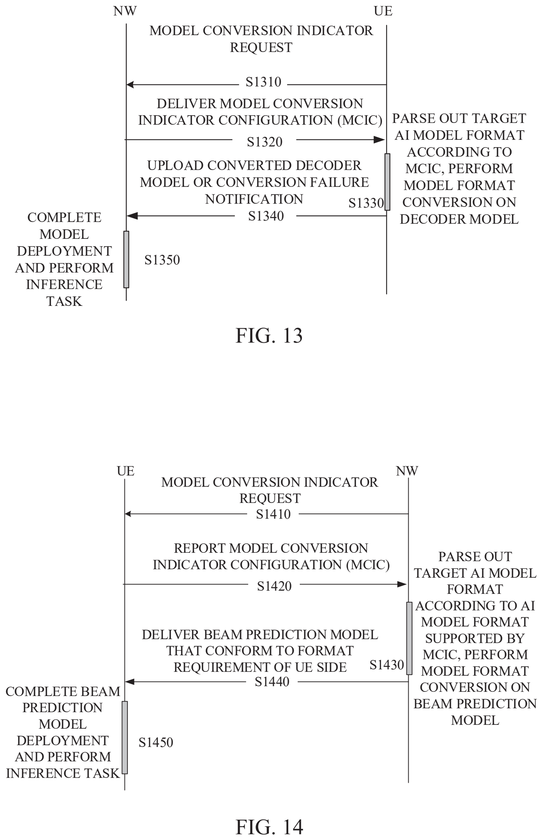

The AI model conversion method proposed in the embodiment of the present disclosure may be used not only in the NW side delivering a model to the UE side, but also in the UE uploading an AI model to the NW. AI model transmission in both the uplink and downlink need to consider signaling interaction for unified AI model formats. Different from Example 1-1, this example proposes an AI model conversion indication method in a channel state feedback scheme trained at the UE side, as illustrated in FIG. 13.

In the example, the CSI models (encoder and decoder) can all be trained at the UE side, and the decoder model needs to be deployed at the NW side, so the UE needs to upload the decoder model to the NW side. Before transmitting the decoder model, the NW needs to deliver the AI model convertor indicator configuration (MCIC) to the UE to request a converted decoder model. The specific process example is as follows.

S1310, the UE transmits the AI model conversion indicator request to the NW through UCI. The step is optional. For example, the NW performing S1320 can be event-triggered or directly triggered.

S1320, the NW delivers the AI MCIC information to the UE through DCI. Specifically, the example takes the following three AI model formats supported by the NW side as examples: Tensorflow (TF), Pytorch (PT), and ONNX.

Different from Example 1-1, the MCIC information in this example indicates the AI model formats supported by the NW side, which are not AI model formats supported by the mobile end, but AI model formats supported by deep learning frameworks on the PC end.

| indicated information of the first bit of the MCIC | indicated information of the second bit of the MCIC | indicated information of the third bit of the MCIC |
|---|---|---|
| (Support/Not support) TF | (Support/Not support) PT | (Support/Not support) ONNX |
| 1/0 | 1/0 | 1/0 |

Based on the above table, the 3-bit value of the MCIC information can be used to indicate the following contents:
- 000:: the current UE does not support an AI-based CSI inference function;
- 001:: only supports an AI model in TF format;
- 010:: only supports an AI model in PT format;
- 011:: supports AI models in both TF and PT formats;
- 100:: only supports an AI model in ONNX format;
- 101:: supports AI models in both TF and ONNX formats;
- 110:: supports AI models in both PT and ONNX formats;
- 111:: supports AI models in TF, PT, and ONNX formats.

The indicated information of the MCIC is not limited to the above example, and fewer or more bits can also be used to indicate support for more or fewer model formats.

S1330, the UE parses out a target AI model format according to the received MCIC information, and queries an encoder model file and/or model converter that satisfy a requirement from the MCIC information. If there is the encoder model file and/or model converter that satisfy the requirement from MCIC information, perform S1340-1. If no encoder model and model converter in the target format is found, perform S1340-2.

S1340-1, the UE performs model format conversion and delivers the encoder model that conforms to the format requirement to the UE.

S1340, the UE transmits the converted decoder model or a conversion failure notification. For example, the following cases may be included.

In S1330, S1340-2, the UE delivers a failure message to notify the UE that an AI model in an effective format cannot be provided.

S1350, the UE receives the encoder model that conforms to or satisfies the MCIC information requirement in S1320, completes deployment and a subsequent inference task.

During an AI model transmission, the NW indicates to the UE to perform the AI model conversion operation by reporting the model format conversion indicator configuration. The converted AI model can adapt to different deep learning frameworks, flexibly coping with the problem of inconsistent AI deep frameworks between different devices. In addition, air interface overhead caused by invalid AI model transmission and computational overhead caused by repeated training of AI models are avoided, device power consumption is reduced, and AI model deployment efficiency is improved.

### Example 2: AI model conversion in an AI scheme with single-side training and single-side deployment

### Example 2-1: Training at the NW side and deployment at the UE side. The example is described by taking AI beam management as an example.

The example can be applied to the process of AI beam management, with reference to FIG. 4a, FIG. 4b and related description. The workflow of AI model conversion in the AI-based beam prediction scheme is as illustrated in FIG. 14.

A beam prediction model in the example can be trained at the NW side and deployed at the UE side, so the NW needs to transmit the model to the UE side. Before transmitting the model, it is necessary to report an AI model convertor indicator configuration (MCIC) to request a converted model. The specific process is as follows.

S1410, the NW transmits an AI model conversion configuration request to the UE through DCI. The step is optional. For example, the step S1420 can be triggered by a service, or the NW can be directly triggered to perform S1420.

S1420, the UE reports AI MCIC information to the NW through UCI based on the received AI model conversion configuration request. Specifically, the example takes the following 3 AI model formats supported by the UE side as examples: Tensorflow (TF), TFLit, and ONNX.

Different from Example 1-1, the UE side in this example can support both a lightweight AI model format (TFLit) for the mobile end, and a model format in a deep learning framework Tensorflow commonly used on the PC.

| indicated information of the first bit of the MCIC | indicated information of the second bit of the MCIC | indicated information of the third bit of the MCIC |
|---|---|---|
| (Support/Not support) TF | (Support/ Not support) TFLit | (Support/ Not support) ONNX |
| 1/0 | 1/0 | 1/0 |

Based on the above table, the 3-bit value of the MCIC can be used to indicate the following contents:
- 000:: the current UE does not support an AI-based CSI inference function;
- 001:: only supports an AI model in TF format;
- 010:: only supports an AI model in TFLit format;
- 011:: supports AI models in both TF and TFLit formats;
- 100:: only supports an AI model in ONNX format;
- 101:: supports AI models in both TF and ONNX formats;
- 110:: supports AI models in both TFLit and ONNX formats;
- 111:: supports AI models in TF, TFLit, and ONNX formats.

S1430, the NW parses out a target AI model format according to the received MCIC information, and queries a beam prediction model file and/or a model converter that satisfy the MCIC format requirement.

S1440, the NW delivers the beam prediction model that conforms to the format requirement of the UE side. For example, the following cases may be included. If there is the beam prediction model file and/or the model converter that satisfy the MCIC format requirement, perform S1440-1. If no beam prediction model and model converter in the target format is found, perform S1440-2.

S1440-1, the NW performs model format conversion and delivers the beam prediction model that conforms to the format requirement to the UE.

S1440-2, the NW delivers a failure message to notify the UE that an AI model in an effective format cannot be provided.

S1450, the UE receives the beam prediction model that conforms to or satisfies the MCIC format requirement in S1420, and completes deployment and a subsequent inference task.

During AI model transmission, the UE indicates to the NW to perform the AI model conversion operation by reporting the model format conversion indicator configuration. The converted AI model can adapt to deep learning frameworks of different UEs, flexibly coping with the problem of inconsistent AI deep frameworks between different devices. In addition, air interface overhead caused by invalid AI model transmission and computational overhead caused by repeated training of AI models are avoided, device power consumption is reduced, and AI model deployment efficiency is improved.

Example 2-2: Training at the UE side and deployment at the NW side. The example is described by taking AI beam management as an example.

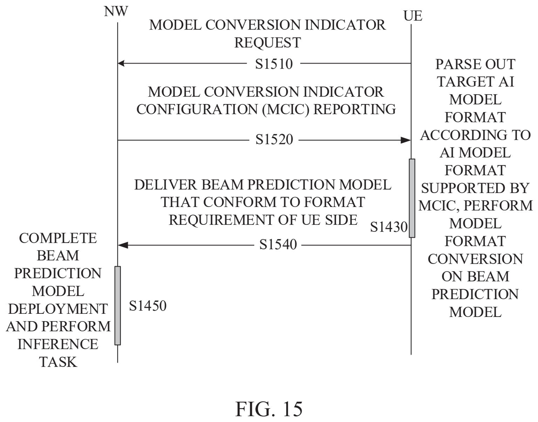

Different from Example 2-1, in this example, the UE uploads the AI model to the NW, as illustrated in FIG. 15.

Different from Example 2-1, the UE, as the model training side, needs to upload the converted model to the NW. The basic steps are the same as the steps in the above example, and the details will not be repeated.

In particular, the MCIC information in S1520 can support both a lightweight AI model format for the mobile end and a model format of a deep learning framework for the PC end.

The MCIC information depends on a capability of the device on which the AI model is to be deployed and a range of deep learning frameworks that the device supports. The range may include the model format under the lightweight AI framework or the deep learning framework for the PC end, without limitation. The MCIC information includes a set of all AI model formats that may be supported by the AI model inference device(s) in the entire system.

A single-side training scenario can also include training on the NW and deployment on the NW side, or training on the UE and deployment on the UE side. In above two cases, model transmission may not be involved, where a model conversion can be decided by the single end, and interaction of AI model conversion configuration information is not involved either.

### Example 3: General AI model conversion indication scheme

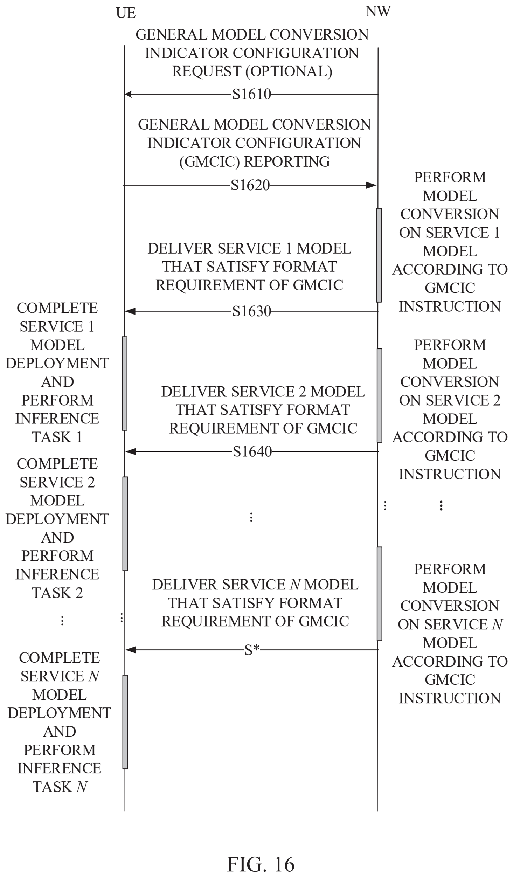

The AI model conversion indication method in the embodiment of the present disclosure is not use case-specific. For example, the method can include UE-specific AI model conversion indication, and the workflow is as illustrated in FIG. 16.

S1610, the NW delivers a general model conversion indicator configuration request to the UE (optional).

S1620, the UE reports general MCIC (GMCIC) information to the NW.

S1630, the NW performs model conversion on a model of service 1 according to the general model conversion configuration information.

S1640, the NW delivers a model of service 1 that conforms to the GMCIC format requirement to the UE.

S1650, the UE completes model deployment of service 1 and performs inference task 1 of the model of service 1.

If there are other services, such as service 2, service 3... and service N, reference can be made to the steps from S1630 to S1650. In addition, if the models required by service 1, service 2, service 3... and service *N* are in the same format, the model conversion step in S1630 can be performed once, and then the corresponding converted model can be delivered for the multiple services subsequently.

In the example, there is no need for a specific AI task to drive and trigger the MCIC request. Instead, the UE can actively send the GMCIC information to the NW once after accessing, and the GMCIC information plays a guiding role in conversion for all AI models that need to be sent to the UE. The GMCIC information in S1620 can be reported independently through UCI, or reported together with a UE-capability indicator configuration.

During AI model transmission, the UE indicates to the NW to perform the AI model conversion operation by reporting the model format conversion indicator configuration. The converted AI model can adapt to deep learning frameworks of different UEs, flexibly coping with the problem of inconsistent AI deep frameworks between different devices. In addition, air interface overhead caused by invalid AI model transmission and computational overhead caused by repeated training of AI models are avoided, device power consumption is reduced, and AI model deployment efficiency is improved.

The communication method provided in the embodiment of the present disclosure can include an indication method for AI model conversion. The type of indication for AI model conversion can include any configuration form of MCIC information in Examples 1 to 3. The MCIC/GMCIC information depends on a capability of the device on which the AI model is to be deployed and a range of a deep learning framework that the device supports. The range may include the model format under the lightweight AI framework, the deep learning framework for the PC end, or an open file specification, etc. The specific format of the AI model is not limited.

The MCIC information includes a set of all AI model formats that may be supported by the AI model inference device(s) in the entire system, or a subset thereof. Therefore, the MCIC information is not limited to the setting in the above example, and fewer or more bits can also be used to indicate support for more or fewer model formats (extensible and flexibly selectable).

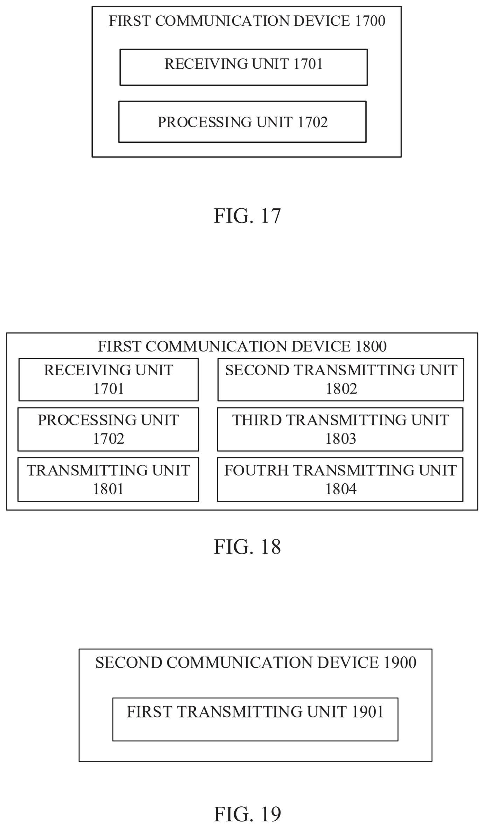

FIG. 17 is a schematic block diagram of a first communication device 1700 according to an embodiment of the present disclosure. The first communication device 1700 may include a receiving unit 1701 and a processing unit 1702. The receiving unit 1701 is configured to receive model format configuration information from a second communication device. The processing unit 1702 is configured to perform a model format-related operation according to the model format configuration information.

In an implementation, the model format configuration information is used for indicating whether the second communication device supports one or more model formats.

In an implementation, the model format configuration information is used for indicating whether the second communication device supports one or more of the following model formats: a TensorFlow (TF) format, a TensorFlow Lite (TFlit) format, a PT format, and an open neural network exchange (ONNX) format.

In an implementation, as illustrated in FIG. 18, the processing unit 1702 is configured to obtain one or more target model formats supported by the second communication device according to the model format configuration information, and check whether models in the first communication device contain a first model that satisfies the one or more target model formats.

In an implementation, the first communication device further includes a first transmitting unit 1801. The processing unit 1702 is further configured to, when the first communication device contains a first model that satisfies one target model format, control the first transmitting unit 1801 to transmit the first model and/or a parameter of the first model to the second communication device. Alternatively, the processing unit 1702 is further configured to, when the first communication device contains *N* first models that satisfy *N* target model formats, control the first transmitting unit 1801 to transmit one or more first models and/or a parameter(s) of the one or more first models among the *N* first models to the second communication device, *N* being greater than 1.

In an implementation, the first communication device further includes a second transmitting unit 1802. The processing unit 1702 is further configured to, when the first communication device contains a model converter that satisfies one target model format, convert a second model into a first model that satisfies the one target model format through the model converter, and control the second transmitting unit 1802 to transmit the first model and/or a parameter of the first model to the second communication device. Alternatively, the processing unit 1702 is further configured to, when the first communication device contains *N* model converters that satisfy *N* target model formats, convert the second model into one or more first models through one or more of the *N* model converters, and control the second transmitting unit 1802 to transmit the one or more first models and/or a parameter(s) of the one or more first models to the second communication device, *N* being greater than 1.

In an implementation, the first model is obtained based on a model trained by the first communication device or based on a sub-model of the model trained by the first communication device.

In an implementation, the first communication device is a network device, and the second communication device is a terminal device.

In an implementation, the first model is an encoder model of a CSI model, and the CSI model is trained on the network device and deployed on the network device and/or the terminal device.

In an implementation, the first communication device is the terminal device, and the second communication device is the network device.

In an implementation, the first model is a decoder model of the CSI model, and the CSI model is trained on the terminal device and deployed on the network device and/or the terminal device.

In an implementation, the first communication device is a first terminal device, and the second communication device is a second terminal device.

In an implementation, the first model is the encoder model and/or the decoder model of the CSI model, and the CSI model is trained on the first terminal device and deployed on the first terminal device and/or the second terminal device.

In an implementation, the first communication device further includes a third transmitting unit 1803. The processing unit 1702 is further configured to, when the first communication device does not contain a model and/or a model converter that satisfies the one or more target model formats, control the third transmitting unit 1803 to transmit notification information. The notification information is used for notifying the second communication device that a model satisfying the format cannot be provided.

In an implementation, the first communication device 1700 further includes a fourth transmitting unit 1804 configured to transmit a model format configuration request to the second communication device.

In an implementation, the model format configuration request is a general-model-format configuration request, and the general-model-format configuration request is used for indicating a general model format for multiple services.

In an implementation, the model format configuration information is general-model-format configuration information, and the general-model-format configuration information includes whether multiple services of one or more second communication devices support one or more general model formats.

In an implementation, the first communication device contains a model that satisfy one or more of the following model formats: a TF format, a TFlit format, a PT format, and an ONNX format.

The first communication devices 1700 and 1800 in the embodiment of the present disclosure can implement the corresponding function of the first communication device in the foregoing method embodiment. For the process, function, implementation, and beneficial effect corresponding to each module (sub-module, unit, component, etc.) in the first communication device, reference may be made to the corresponding description in the above method embodiment, which will not be repeated herein. It should be noted that the function described with respect to each module (sub-module, unit, component, etc.) in the first communication device of the embodiment of the disclosure may be implemented by different modules (sub-modules, units, components, etc.) or by the same module (sub-module, unit, component, etc.).

FIG. 19 is a schematic block diagram of a second communication device 1900 according to an embodiment of the present disclosure. The second communication device 1900 may include a first transmitting unit 1901 configured to transmit model format configuration information to a first communication device, where the model format configuration information is used for indicating to the first communication device to perform a model format-related operation.

In an implementation, the model format configuration information is used for indicating whether the second communication device supports one or more model formats.

In an implementation, the model format configuration information is used for indicating whether the second communication device supports one or more of the following model formats: a TensorFlow (TF) format, a TensorFlow Lite (TFlit) format, a PT format, and an open neural network exchange (ONNX) format.

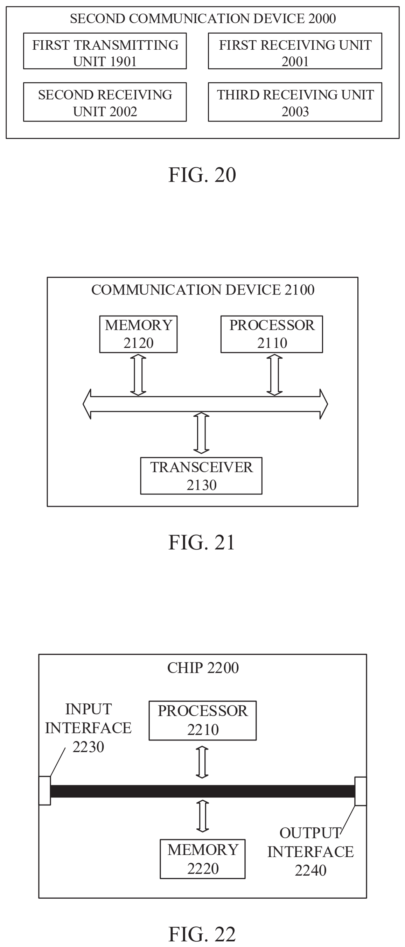

In an implementation, as illustrated in FIG. 20, the second communication device further includes a first receiving unit 2001 configured to receive a first model and/or a parameter of the first model transmitted by the first communication device, where the first model satisfies one target model format. Alternatively, the first receiving 2001 is configured to receive one or more first models and/or a parameter(s) of the one or more first models transmitted by the first communication device, where the one or more first models and/or a parameter(s) of the one or more first models are in *N* first models that satisfy N target model formats among *N* first models, N being greater than 1.

In an implementation, the first model is obtained based on a model trained by the first communication device or based on a sub-model of the model trained by the first communication device.

In an implementation, the first communication device is a network device, and the second communication device is a terminal device.

In an implementation, the first model is an encoder model of a CSI model, and the CSI model is trained on the network device and deployed on the network device and/or the terminal device.

In an implementation, the first communication device is the terminal device, and the second communication device is the network device.

In an implementation, the first model is a decoder model of the CSI model, and the CSI model is trained on the terminal device and deployed on the network device and/or the terminal device.

In an implementation, the first communication device is a first terminal device, and the second communication device is a second terminal device.

In an implementation, the first model is the encoder model and/or the decoder model of the CSI model, and the CSI model is trained on the first terminal device and deployed on the first terminal device and/or the second terminal device.

In an implementation, as illustrated in FIG. 20, the second communication device further includes a second receiving unit 2002 configured to receive notification information transmitted by the first communication device. The notification information is used for notifying the second communication device that a model satisfying the format cannot be provided.

In an implementation, as illustrated in FIG. 20, the second communication device further includes a third receiving unit 2003 configured to receive a model format configuration request transmitted by the first communication device.

In an implementation, the model format configuration request is a general-model-format configuration request, and the general-model-format configuration request is used for indicating a general model format for multiple services.

In an implementation, the model format configuration information is general-model-format configuration information, and the general-model-format configuration information includes whether multiple services of one or more second communication devices support one or more general model formats.

In an implementation, the first communication device contains a model that satisfy one or more of the following model formats: a TF format, a TFlit format, a PT format, and an ONNX format.

The second communication devices 1900 and 2000 in the embodiment of the present disclosure can implement the corresponding function of the second communication device in the foregoing method embodiment. For the process, function, implementation, and beneficial effect corresponding to each module (sub-module, unit, component, etc.) in the second communication device, reference may be made to the corresponding description in the above method embodiment, which will not be repeated herein. It should be noted that the function described with respect to each module (sub-module, unit, component, etc.) in the second communication device of the embodiment of the disclosure may be implemented by different modules (sub-modules, units, components, etc.) or by the same module (sub-module, unit, component, etc.).

FIG. 21 is a schematic structural diagram of a communication device 2100 according to an embodiment of the present disclosure. The communication device 2100 includes a processor 2110, and the processor 2110 can invoke and execute a computer program from a memory, to cause the communication device 2100 to perform the method in the embodiment of the present disclosure.

In an implementation, the communication device 2100 may further include a memory 2120. The processor 2110 can invoke and execute a computer program from the memory 2120, which is operable with the communication device 2100 to perform the method in the embodiment of the present disclosure. The memory 2120 may be a separate device independent of the processor 2110, or may be integrated into the processor 2110.

In an implementation, the communication device 2100 may further include a transceiver 2130, and the processor 2110 can control the transceiver 2130 to communicate with other devices. Specifically, the processor 2110 can control the transceiver 2130 to transmit information or data to other devices or receive information or data transmitted by other devices. The transceiver 2130 may include a transmitter and a receiver. The transceiver 2130 may further include one or more antennas.

In an implementation, the communication device 2100 may be the first communication device in the embodiment of the present disclosure, and the communication device 2100 can implement the corresponding process performed by the first communication device in each method of the embodiment of the present disclosure. For the sake of brevity, details are not repeated herein.

In an implementation, the communication device 2100 may be the second communication device in the embodiment of the present disclosure, and the communication device 2100 can implement the corresponding process performed by the second communication device in each method of the embodiment of the present disclosure. For the sake of brevity, details are not repeated herein.

FIG. 22 is a schematic structural diagram of a chip 2200 according to an embodiment of the present disclosure. The chip 2200 includes a processor 2210, and the processor 2210 can invoke and execute a computer program from a memory to implement the method in the embodiment of the present disclosure.

In an implementation, the chip 2200 may further include a memory 2220. The processor 2210 can invoke and execute a computer program from the memory 2220 to implement the method performed by the first communication device or the second communication device in the embodiment of the present disclosure. The memory 2220 may be a separate device independent of the processor 2210, or may be integrated into the processor 2210.

In an implementation, the chip 2200 may further include an input interface 2230. The processor 2210 can control the input interface 2230 to communicate with other devices or chips, specifically, to obtain information or data transmitted by other devices or chips.

In an implementation, the chip 2200 may further include an output interface 2240. The processor 2210 can control the output interface 2240 to communicate with other devices or chips. Specifically, the processor 2210 can control the output interface 2240 to output information or data to other devices or chips.

In an implementation, the chip can be applied to the first communication device in the embodiment of the present disclosure, and the chip can implement the corresponding process performed by the first communication device in each method of the embodiment of the present disclosure. For the sake of brevity, details are not repeated herein.

In an implementation, the chip can be applied to the second communication device in the embodiment of the present disclosure, and the chip can implement the corresponding process performed by the second communication device in each method of the embodiment of the present disclosure. For the sake of brevity, details are not repeated herein.

The chip applied to the first communication device and the second communication device may be the same chip or different chips.

It should be understood that the chip in embodiments of the disclosure may also be referred to as a system-on-chip (SOC).

The processor described above may be a general-purpose processor, a digital signal processor (DSP), a field programmable gate array (FPGA), an application specific integrated circuit (ASIC), or other programmable logic devices, transistor logic devices or discrete hardware components, etc. The general purpose processor mentioned above may be a microprocessor, or the processor may be any conventional processor or the like.

The memory mentioned above may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The magnetic surface memory may be a magnetic disc memory or a magnetic tape memory. The volatile memory can be a random access memory (RAM).

It should be understood that, the memory above is intended for illustration rather than limitation. For example, the memory in embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), an synch link DRAM (SLDRAM), a direct Rambus RAM (DR RAM), etc. In other words, the memory in embodiments of the disclosure is intended to include, but is not limited to, these and any other suitable types of memory.

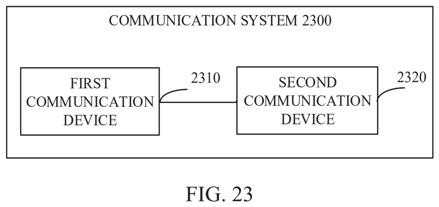

FIG. 23 is a schematic block diagram of a communication system 2300 according to an embodiment of the present disclosure. The communication system 2300 includes a first communication device 2310 and a second communication device 2320.

The first communication device 2310 includes a receiving unit and a processing unit. The receiving unit is configured to receive model format configuration information from the second communication device. The processing unit is configured to perform a model format-related operation according to the model format configuration information.

The second communication device 2320 includes a first transmitting unit. The first transmitting unit is configured to transmit model the format configuration information to the first communication device, where the model format configuration information is used for indicating to the first communication device to perform a model format-related operation. The first communication device 2310 may be configured to implement the corresponding function performed by the first communication device in the above method, and the second communication device 2320 may be configured to implement the corresponding function performed by the second communication device in the above method. For the sake of brevity, details are not repeated herein.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instructions can be stored in a computer-readable storage medium, or transmitted from one computer-readable storage medium to another computer-readable storage medium. For example, the computer instructions can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

It should also be understood that, in various method embodiments of the disclosure, the magnitude of a sequence number of each of the foregoing processes does not mean an execution order, and an execution order of each process should be determined according to a function and an internal logic of the process, which shall not constitute any limitation to an implementation process of embodiments of the disclosure.

It will be evident to those skilled in the art that, for the sake of convenience and brevity, in terms of the specific working processes of the foregoing systems, apparatuses, and units, reference can be made to the corresponding processes in the foregoing method embodiments, which will not be described in detail again herein.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A communication method, comprising:
receiving, by a first communication device, model format configuration information from a second communication device; and
performing, by the first communication device, a model format-related operation according to the model format configuration information.

2. The method of claim 1, wherein the model format configuration information is used for indicating whether the second communication device supports one or more model formats.

3. The method of claim 2, wherein the model format configuration information is used for indicating whether the second communication device supports one or more of:
a TensorFlow (TF) format, a TensorFlow Lite (TFlit) format, and an open neural network exchange (ONNX) format.

4. The method of any one of claims 1 to 3, wherein performing, by the first communication device, the model format-related operation according to the model format configuration information, comprises:
obtaining, by the first communication device, one or more target model formats supported by the second communication device according to the model format configuration information; and
checking, by the first communication device, whether models in the first communication device contain a first model that satisfies the one or more target model formats.

5. The method of claim 4, wherein performing, by the first communication device, the model format-related operation according to the model format configuration information, further comprises:
when the first communication device contains the first model that satisfies one target model format, transmitting the first model and/or a parameter of the first model to the second communication device; or
when the first communication device contains *N* first models that satisfy *N* target model formats, transmitting one or more first models and/or a parameter of the one or more first models among the *N* first models to the second communication device, *N* being greater than 1.

6. The method of claim 4 or 5, wherein performing, by the first communication device, the model format-related operation according to the model format configuration information, comprises:
when the first communication device contains a model converter that satisfies one target model format, converting a second model into a first model that satisfies the one target model format through the model converter, and transmitting the first model and/or a parameter of the first model to the second communication device; or
when the first communication device contains *N* model converters that satisfy *N* target model formats, converting the second model into one or more first models through one or more of the *N* model converters, and transmitting the one or more first models and/or a parameter of the one or more first models to the second communication device, *N* being greater than 1.

7. The method of any one of claims 4 to 6, wherein the first model is obtained based on a model trained by the first communication device or based on a sub-model of the model trained by the first communication device.

8. The method of any one of claims 4 to 7, wherein the first communication device is a network device, and the second communication device is a terminal device.

9. The method of claim 8, wherein the first model is an encoder model of a channel-state information (CSI) model, and the CSI model is trained on the network device and deployed on the network device and/or the terminal device.

10. The method of any one of claims 4 to 7, wherein the first communication device is a terminal device, and the second communication device is a network device.

11. The method of claim 10, wherein the first model is a decoder model of a CSI model, and the CSI model is trained on the terminal device and deployed on the network device and/or the terminal device.

12. The method of any one of claims 4 to 7, wherein the first communication device is a first terminal device, and the second communication device is a second terminal device.

13. The method of claim 12, wherein the first model is an encoder model and/or a decoder model of a CSI model, and the CSI model is trained on the first terminal device and deployed on the first terminal device and/or the second terminal device.

14. The method of any one of claims 4 to 13, wherein performing, by the first communication device, the model format-related operation according to the model format configuration information, further comprises:
when the first communication device does not contain a model and/or a model converter that satisfies the one or more target model formats, transmitting, by the first communication device, notification information for notifying the second communication device that a model satisfying the format cannot be provided.

15. The method of any one of claims 1 to 14, wherein the method further comprises:
transmitting, by the first communication device, a model format configuration request to the second communication device.

16. The method of claim 15, wherein the model format configuration request is a general-model-format configuration request, and the general-model-format configuration request is used for indicating a general model format for a plurality of services.

17. The method of claim 15 or 16, wherein the model format configuration information is general-model-format configuration information, and the general-model-format configuration information comprises whether a plurality of services of one or more second communication devices support one or more general model formats.

18. The method of any one of claims 1 to 17, wherein the first communication device contains a model that satisfies one or more of:
a TF format, a TFlit format, and an ONNX format.

19. A communication method, comprising:
transmitting, by a second communication device, model format configuration information to a first communication device, wherein the model format configuration information is used for indicating to the first communication device to perform a model format-related operation.

20. The method of claim 19, wherein the model format configuration information is used for indicating whether the second communication device supports one or more model formats.

21. The method of claim 20, wherein the model format configuration information is used for indicating whether the second communication device supports one or more of:
a TensorFlow (TF) format, a TensorFlow Lite (TFlit) format, and an open neural network exchange (ONNX) format.

22. The method of any one of claims 19 to 21, wherein the method further comprises:
receiving, by the second communication device, a first model and/or a parameter of the first model transmitted by the first communication device, wherein the first model satisfies one target model format; or
receiving, by the second communication device, one or more first models and/or a parameter of the one or more first models transmitted by the first communication device, wherein the one or more first models are in *N* first models that satisfy *N* target model formats, *N* being greater than 1.

23. The method of claim 22, wherein the first model is obtained based on a model trained by the first communication device or based on a sub-model of the model trained by the first communication device.

24. The method of claim 22 or 23, wherein the first communication device is a network device, and the second communication device is a terminal device.

25. The method of claim 24, wherein the first model is an encoder model of a channel-state information (CSI) model, and the CSI model is trained on the network device and deployed on the network device and/or the terminal device.

26. The method of claim 22 or 23, wherein the first communication device is a terminal device, and the second communication device is a network device.

27. The method of claim 26, wherein the first model is a decoder model of a CSI model, and the CSI model is trained on the terminal device and deployed on the network device and/or the terminal device.

28. The method of claim 22 or 23, wherein the first communication device is a first terminal device, and the second communication device is a second terminal device.

29. The method of claim 28, wherein the first model is an encoder model and/or a decoder model of a CSI model, and the CSI model is trained on the first terminal device and deployed on the first terminal device and/or the second terminal device.

30. The method of any one of claims 19 to 29, wherein the method further comprises:
receiving, by the second communication device, notification information transmitted by the first communication device, wherein the notification information is used for notifying the second communication device that a model satisfying the format cannot be provided.

31. The method of any one of claims 19 to 30, wherein the method further comprises:
receiving, by the second communication device, a model format configuration request transmitted by the first communication device.

32. The method of claim 31, wherein the model format configuration request is a general-model-format configuration request, and the general-model-format configuration request is used for indicating a general model format for a plurality of services.

33. The method of claim 31 or 32, wherein the model format configuration information is general-model-format configuration information, and the general-model-format configuration information comprises whether a plurality of services of one or more second communication devices support one or more general model formats.

34. The method of any one of claims 19 to 33, wherein the first communication device contains a model that satisfies one or more of:
a TF format, a TFlit format, and an ONNX format.

35. A first communication device, comprising:
a receiving unit configured to receive model format configuration information from a second communication device; and
a processing unit configured to perform a model format-related operation according to the model format configuration information.

36. The first communication device of claim 35, wherein the model format configuration information is used for indicating whether the second communication device supports one or more model formats.

37. The first communication device of claim 36, wherein the model format configuration information is used for indicating whether the second communication device supports one or more of:
a TensorFlow (TF) format, a TensorFlow Lite (TFlit) format, and an open neural network exchange (ONNX) format.

38. The first communication device of any one of claims 35 to 37, wherein the processing unit is configured to
obtain one or more target model formats supported by the second communication device according to the model format configuration information; and
check whether models in the first communication device contain a first model that satisfies the one or more target model formats.

39. The first communication device of claim 38, wherein the first communication device further comprises a first transmitting unit, wherein
the processing unit is further configured to, when the first communication device contains the first model that satisfies one target model format, control the first transmitting unit to transmit the first model and/or a parameter of the first model to the second communication device; or
the processing unit is further configured to, when the first communication device contains *N* first models that satisfy *N* target model formats, control the first transmitting unit to transmit one or more first models and/or a parameter of the one or more first models among the *N* first models to the second communication device, *N* being greater than 1.

40. The first communication device of claim 38 or 39, wherein the first communication device further comprises a second transmitting unit, wherein
the processing unit is further configured to, when the first communication device contains a model converter that satisfies one target model format, convert a second model into a first model that satisfies the one target model format through the model converter, and control the second transmitting unit to transmit the first model and/or a parameter of the first model to the second communication device; or
the processing unit is further configured to, when the first communication device contains *N* model converters that satisfy *N* target model formats, convert the second model into one or more first models through one or more of the *N* model converters, and control the second transmitting unit to transmit the one or more first models and/or a parameter of the one or more first models to the second communication device, *N* being greater than 1.

41. The first communication device of any one of claims 38 to 40, wherein the first model is obtained based on a model trained by the first communication device or based on a sub-model of the model trained by the first communication device.

42. The first communication device of any one of claims 38 to 41, wherein the first communication device is a network device, and the second communication device is a terminal device.

43. The first communication device of claim 42, wherein the first model is an encoder model of a channel-state information (CSI) model, and the CSI model is trained on the network device and deployed on the network device and/or the terminal device.

44. The first communication device of any one of claims 38 to 41, wherein the first communication device is a terminal device, and the second communication device is a network device.

45. The first communication device of claim 44, wherein the first model is a decoder model of a CSI model, and the CSI model is trained on the terminal device and deployed on the network device and/or the terminal device.

46. The first communication device of any one of claims 38 to 41, wherein the first communication device is a first terminal device, and the second communication device is a second terminal device.

47. The first communication device of claim 46, wherein the first model is an encoder model and/or a decoder model of a CSI model, and the CSI model is trained on the first terminal device and deployed on the first terminal device and/or the second terminal device.

48. The first communication device of any one of claims 38 to 47, wherein the first communication device further comprises a third transmitting unit, wherein
the processing unit is further configured to, when the first communication device does not contain a model and/or a model converter that satisfies the one or more target model formats, control the third transmitting unit to transmit notification information for notifying the second communication device that a model satisfying the format cannot be provided.

49. The first communication device of any one of claims 35 to 48, wherein the first communication device further comprises:
a fourth transmitting unit configured to transmit a model format configuration request to the second communication device.

50. The first communication device of claim 49, wherein the model format configuration request is a general-model-format configuration request, and the general-model-format configuration request is used for indicating a general model format for a plurality of services.

51. The first communication device of claim 49 or 50, wherein the model format configuration information is general-model-format configuration information, and the general-model-format configuration information comprises whether a plurality of services of one or more second communication devices support one or more general model formats.

52. The first communication device of any one of claims 35 to 51, wherein the first communication device contains a model that satisfies one or more of:
a TF format, a TFlit format, and an ONNX format.

53. A second communication device, comprising:
a first transmitting unit configured to transmit model format configuration information to a first communication device, wherein the model format configuration information is used for indicating to the first communication device to perform a model format-related operation.

54. The second communication device of claim 53, wherein the model format configuration information is used for indicating whether the second communication device supports one or more model formats.

55. The second communication device of claim 54, wherein the model format configuration information is used for indicating whether the second communication device supports one or more of:
a TensorFlow (TF) format, a TensorFlow Lite (TFlit) format, and an open neural network exchange (ONNX) format.

56. The second communication device of any one of claims 53 to 55, wherein the second communication device further comprises a first receiving unit configured to:
receive a first model and/or a parameter of the first model transmitted by the first communication device, wherein the first model satisfies one target model format; or
receive one or more first models and/or a parameter of the one or more first models transmitted by the first communication device, wherein the one or more first models are in *N* first models that satisfy *N* target model formats, *N* being greater than 1.

57. The second communication device of claim 56, wherein the first model is obtained based on a model trained by the first communication device or based on a sub-model of the model trained by the first communication device.

58. The second communication device of claim 56 or 57, wherein the first communication device is a network device, and the second communication device is a terminal device.

59. The second communication device of claim 58, wherein the first model is an encoder model of a channel-state information (CSI) model, and the CSI model is trained on the network device and deployed on the network device and/or the terminal device.

60. The second communication device of claim 56 or 57, wherein the first communication device is a terminal device, and the second communication device is a network device.

61. The second communication device of claim 60, wherein the first model is a decoder model of a CSI model, and the CSI model is trained on the terminal device and deployed on the network device and/or the terminal device.

62. The second communication device of claim 56 or 57, wherein the first communication device is a first terminal device, and the second communication device is a second terminal device.

63. The second communication device of claim 62, wherein the first model is an encoder model and/or a decoder model of a CSI model, and the CSI model is trained on the first terminal device and deployed on the first terminal device and/or the second terminal device.

64. The second communication device of any one of claims 53 to 63, wherein the second communication device further comprises:
a second receiving unit configured to receive notification information transmitted by the first communication device, wherein the notification information is used for notifying the second communication device that a model satisfying the format cannot be provided.

65. The second communication device of any one of claims 53 to 64, wherein the second communication device further comprises:
a third receiving unit configured for the second communication device to receive a model format configuration request transmitted by the first communication device.

66. The second communication device of claim 65, wherein the model format configuration request is a general-model-format configuration request, and the general-model-format configuration request is used for indicating a general model format for a plurality of services.

67. The second communication device of claim 65 or 66, wherein the model format configuration information is general-model-format configuration information, and the general-model-format configuration information comprises whether a plurality of services of one or more second communication devices support one or more general model formats.

68. The second communication device of any one of claims 53 to 67, wherein the first communication device contains a model that satisfies one or more of:
a TF format, a TFlit format, and an ONNX format.

69. A communication device, comprising:
a memory configured to store a computer program; and
a processor configured to invoke and execute the computer program stored in the memory, to cause the communication device to perform the method of any one of claims 1 to 18 or any one of claims 19 to 34.

70. A chip, comprising a processor configured to invoke and execute a computer program stored in a memory, to cause a device equipped with the chip to perform the method of any one of claims 1 to 18 or any one of claims 19 to 34.

71. A computer-readable storage medium configured to store a computer program which, when run by a device, causes the device to perform the method of any one of claims 1 to 18 or any one of claims 19 to 34.

72. A computer program product, comprising computer program instructions which are operable with a computer to perform the method according to any one of claims 1 to 18 or any one of claims 19 to 34.

73. A computer program operable with a computer to perform the method of any one of claims 1 to 18 or any one of claims 19 to 34.
